# EUROPÄISCHE PATENTSCHRIFT

(11) **EP 2 532 907 B1**
(45) Veröffentlichungstag und Bekanntmachung des Hinweises auf die Patenterteilung: **12.12.2018**
(21) Anmeldenummer: 12170683.2
(22) Anmeldetag: 04.06.2012
(51) Int. Cl.: F16D 1/08

(54) **Feder für eine Welle-/ Nabeverbindung mit Überlastschutzfunktion, insbesondere für Heckklappenantriebe**
Spring for a cam/shaft connection with overload protection function, in particular for rear flap drives
Ressort pour une liaison arbre-moyeu avec fonction de protection contre les surcharges, en particulier pour les entraînements de hayon

(30) Priorität: 10.06.2011 DE 102011077361
(43) Veröffentlichungstag der Anmeldung: 12.12.2012
(73) Patentinhaber: ROBERT BOSCH GMBH, 70442 Stuttgart (DE); Federtechnik Wangs AG, 7323 Wangs (CH)
(72) Erfinder: Oberle, Hans-Juergen, 76437 Rastatt (DE); Braun, Roland, 77815 Buehl (DE); Rothenberger, Ernst, 8880 Wallenstadt (CH)

(56) Entgegenhaltungen:
- DE-A1- 2 361 218
- DE-A1-102008 028 371
- US-A- 3 197 243
- US-A- 4 479 735
- US-A- 4 981 390

## Beschreibung

### Stand der Technik

Die vorliegende Erfindung betrifft einen Toleranzring, der aus einem bandförmigen, sich flächig erstreckenden Material mit einer durchgängig geschlossenen Grundfläche hergestellt ist. Die vorliegende Erfindung betrifft weiterhin einen insbesondere erfindungsgemäßen Toleranzring, der sich zylinderförmig um eine Achse erstreckt, mit einem Verformungsbereich, in dem eine Vielzahl Erhebungen angeordnet sind, die gegenüber einer konzentrisch um die Achse angeordneten fiktiven Ringfläche, in der der Toleranzring angeordnet ist, erhaben sind.

Toleranzringe werden für reibschlüssige Welle- Nabe- Verbindungen verwendet und ermöglichen den Ausgleich von Bearbeitungstoleranzen und Fluchtungsfehlern sowie verschiedene Wärmeausdehnungen zwischen Welle und Nabe. Außerdem ist mit ihnen ein Drehmoment übertragbar. Sie sind auch als Überlastschutz verwendbar, um ein Durchrutschen zwischen Welle und Nabe ab einem definierten Drehmoment zu ermöglichen. Eine Anwendung eines Toleranzrings als Überlastschutz zeigt beispielsweise die Druckschrift DE 10 2010 038 596.

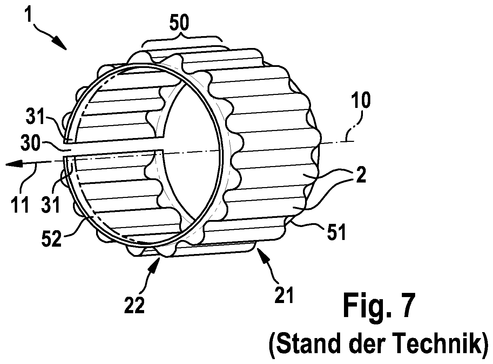

Ein Beispiel eines herkömmlichen Toleranzringes zeigt die **Fig. 7**. Der Toleranzring 1 ist aus einem bandförmigen Federstahlblech hergestellt und weist eine zylindrische Form auf, so dass er sich um eine Achse 10 in eine Längsrichtung 11 des Zylinders erstreckt. Im Toleranzring 1 ist ein Spalt 30 vorgesehen, so dass er zwei sich gegenüberliegende offene Enden 31 aufweist. Zudem weist er beidseitig einen unverformten Randbereich 51, 52 auf, der sich konzentrisch um die Achse 10 erstreckt. Mittig weist der Toleranzring 1 einen Verformungsbereich 50 zwischen den Randbereichen 51, 52 auf, in dem in Umfangrichtung 12 verteilt eine Vielzahl zylindrischer Sicken 2 vorgesehen sind. Die Sicken erstrecken sich in Längsrichtung 11 quer zur Bandrichtung und sind an ihren den Randbereichen 51, 52 zugewandten Enden 21, 22 jeweils kugelhalbschalenförmig ausgebildet. Ein solcher Toleranzring 1 weist einen sehr kleinen Federweg auf, so dass er in einem nur sehr kleinen Arbeitsbereich verwendbar ist. Beispielsweise zur Übertragung eines Drehmomentes oder als Überlastschutz erfordert die Verwendung eines solchen Toleranzringes daher die Herstellung des Toleranzringes sowie der mit dem Toleranzring zusammenwirkenden Bauteile mit sehr engen Toleranzen.

Mit der US 3 197 243 A ist Zentrier- und Sicherungsring bekannt geworden, der aus einem flächigen Blech geformt ist, in das Erhebungen in Längsrichtung durch Ausbildung von Schlitzen ausgeformt sind.

### Offenbarung der Erfindung

Aufgabe der Erfindung ist es, einen Toleranzring zu schaffen, der im Vergleich zum Stand der Technik einen größeren Arbeitsbereich aufweist und daher eine toleranzunabhängigere Herstellung des Toleranzringes und/oder der mit ihm zusammenwirkenden Bauteile ermöglicht.

Die Aufgabe wird gelöst mit einem Toleranzring, der aus einem bandförmigen, sich flächig erstreckenden Material mit einer durchgängig geschlossenen Grundfläche hergestellt ist, wobei in die Grundfläche gezielt Materialausnehmungen eingebracht sind, die die Federkonstante des Toleranzringes verringern.

Eine Materialausnehmung im Sinne der Erfindung ist eine Schwächung des Materials, durch die der Toleranzring bei gleicher Federkraft eine geringere Federkonstante aufweist, so dass seine Federkennlinie insgesamt flacher verläuft. Ferner ist eine Materialausnehmung im Sinne der Erfindung eine gezielt vorgesehene Schwächung des Materials, die die Federkonstante des Toleranzringes verringert.

Prinzipiell eignet sich als Materialausnehmung jede Schwächung, die die gezielte Verringerung der Federkonstante bewirkt. Die Ausführung des Toleranzringes ist nicht auf die ursprüngliche Dicke des verwendeten Ausgangsmaterials beschränkt. Eine Beeinflussung der Federkonstante erfolgt **erfindungsgemäß dadurch**, dass die Materialschwächung durch ein Loch gebildet ist. In dieser Ausführungsform ist sie beispielsweise durch Ausstanzen oder Ausschneiden, und daher mit herkömmlichen Verfahren sehr kostengünstig, realisierbar.
Der Toleranzring erstreckt sich zylinderförmig um eine Achse und in eine Längsrichtung.
Die Aufgabe wird weiterhin gelöst mit einem erfindungsgemäßen Toleranzring, der sich zylinderförmig um eine Achse erstreckt, mit einem Verformungsbereich, in dem eine Vielzahl Erhebungen angeordnet sind, die gegenüber einer konzentrisch um die Achse angeordneten fiktiven Ringfläche, in der der Toleranzring angeordnet ist, erhaben sind, wobei im Verformungsbereich Materialausnehmungen angeordnet sind, die die Federkonstante des Toleranzringes verringern.

Durch die geringere Federkonstante ist der Federweg bei Belastung mit einer Federkraft größer. Daher ist die Herstellung des Toleranzringes sowie der mit dem Toleranzring zusammenwirkenden Bauteile, insbesondere bei Verwendung des Toleranzringes zur Übertragung eines Drehmomentes oder als Überlastschutz, mit größeren Toleranzen möglich.

Die Erhebungen sind bevorzugt in einer Umfangsrichtung des Toleranzringes gleichmäßig verteilt angeordnet. Weiterhin bevorzugt erstrecken sich die Erhebungen in Längsrichtung des Toleranzringes. **Erfindungsgemäß** sind die Materialausnehmungen zwischen den Erhebungen angeordnet, **wobei** sie sich in Längsrichtung erstrecken.

**Erfindungsgemäß** sind die Materialausnehmungen **auch** zwischen der Grundfläche und der fiktiven Randfläche vorgesehen.

Durch die Größe, Anzahl und Anordnung der Materialausnehmungen ist die Federkonstante beziehungsweise die Federkennlinie des Toleranzringes einstellbar.

Es ist **erfindungsgemäß vorgesehen**, dass der Toleranzring einen ersten Randbereich und einen zweiten Randbereich aufweist, die sich jeweils entlang der fiktiven Ringfläche erstrecken. Im Randbereich ist der Toleranzring daher bevorzugt unverformt und erstreckt sich konzentrisch um die Achse. Der Verformungsbereich ist bevorzugt zwischen den Randbereichen angeordnet.

**Erfindungsgemäß** weisen die Erhebungen jeweils an ihren den Randbereichen zugewandten Seiten die Materialausnehmung auf. Dabei sind die Materialausnehmungen als Loch ausgebildet, so dass die Erhebungen an ihren den Randbereichen zugewandten Seiten offen sind. Besonders bevorzugt sind die Materialausnehmungen im Verformungsbereich und nicht im Randbereich vorgesehen.

In einer bevorzugten Ausführungsform weist der Toleranzring einen sich in Längsrichtung erstreckenden Spalt auf. Somit weist er zwei offene Enden auf, die sich gegenüber liegen. Die offenen Enden sind bevorzugt, zumindest geringfügig, voneinander beabstandet, so dass der Radius des Toleranzringes veränderbar ist. Dadurch ist er in einem noch größeren Toleranzbereich verwendbar.

Der Toleranzring ist bevorzugt aus einem Metall oder einer Metalllegierung, insbesondere aus einem Federstahlblech, gefertigt. Besonders bevorzugt ist er einstückig hergestellt. Prinzipiell ist aber auch eine mehrteilige Fertigung denkbar, bei der die mehreren Komponenten des Toleranzringes stoffschlüssig miteinander verbunden sind, insbesondere gelötet oder geschweißt.

In einer bevorzugten Ausführungsform ist der Toleranzring, insbesondere im Verformungsbereich, wellenförmig ausgebildet.

Die Aufgabe wird ebenfalls gelöst mit einer Komponente für ein Fahrzeug mit einer Welle- Nabe- Verbindung, die einen erfindungsgemäßen Toleranzring aufweist. Die Fahrzeugkomponente ist bevorzugt ein Heckklappenantrieb. Es sind aber auch andere Fahrzeugkomponenten bevorzugt, bei denen ein Toleranzring insbesondere zur Übertragung eines Drehmomentes oder als Überlastschutz eingesetzt wird. Dies sind bevorzugt Verstellantriebe beispielsweise zum Verstellen eines Sitzes, einer Fahrzeugtür oder eines Schiebedachs. Grundsätzlich ist der erfindungsgemäße Toleranzring aber auch in anderen Komponenten, beispielsweise in Elektrowerkzeugen, in Lenksäulen oder ähnlichen, verwendbar.

Die Aufgabe wird weiterhin gelöst mit einer Verwendung eines erfindungsgemäßen Toleranzringes für eine Welle- Nabe- Verbindung. Die Aufgabe wird weiterhin gelöst mit einer Verwendung eines erfindungsgemäßen Toleranzringes als Überlastschutz. Die Aufgabe wird weiterhin gelöst mit einer Verwendung eines erfindungsgemäßen Toleranzringes für eine Welle-Nabe- Verbindung mit Überlastschutzfunktion in einem Heckklappenantrieb.

Die Aufgabe wird weiterhin gelöst mit einem Verfahren zur Herstellung eines erfindungsgemäßen Toleranzringes aus einem bandförmigen, sich flächig erstreckenden Material mit durchgängig geschlossener Grundfläche, wobei
- In einem Verformungsbereich des Toleranzringes Erhebungen in die Grundfläche eingebracht werden, und
- Das bandförmige Material um eine Welle gebogen wird, wobei
- Vor, während oder nach Einbringen der Erhebungen, oder nach dem Biegen des bandförmigen Materials um die Welle, gezielt Materialausnehmungen in den Verformungsbereich eingebracht werden, die die Federkonstante des Toleranzringes verringern.

Im Folgenden wird die Erfindung anhand von Figuren beschrieben. Die Figuren sind lediglich beispielhaft und schränken den allgemeinen Erfindungsgedanken nicht ein.
- **Fig. 1, 3 - 5**: zeigen verschiedene Ausführungsformen von Toleranzringen, die nicht zur Erfindung gehören,
- **Fig. 2**: zeigen verschiedene Darstellungen eines erfindungsgemäßen Toleranzringes,
- **Fig. 6**: zeigt schematisch die Federkennlinie eines erfindungsgemäßen Toleranzringes im Vergleich zur Federkennlinie eines Toleranzringes gemäß dem Stand der Technik, und
- **Fig. 7**: zeigt einen Toleranzring gemäß dem Stand der Technik.

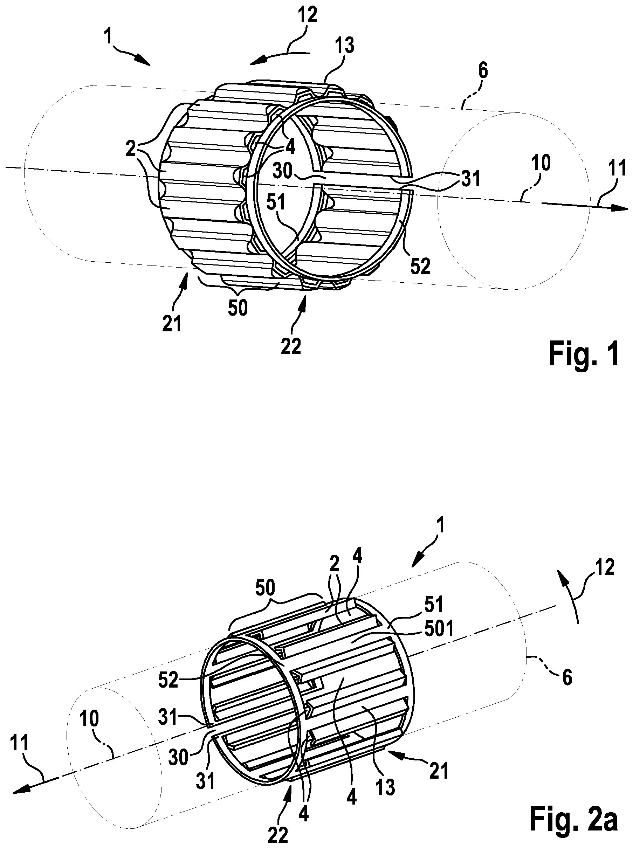

**Fig. 1** zeigt einen nicht zur Erfindung gehörenden Toleranzring 1 in perspektivischer Ansicht. Der Toleranzring 1 ist zylinderförmig ausgebildet und erstreckt sich um eine Achse 10 in eine Längsrichtung 11. Er ist aus einem bandförmigen, sich flächig erstreckenden Material, insbesondere aus Federstahlblech, hergestellt, welches eine durchgängig geschlossene Grundfläche 13 aufweist. Anstelle Federstahlblechs sind auch andere Materialien, insbesondere Metalle oder Metalllegierungen, für die Herstellung des Toleranzringes 1 verwendbar.

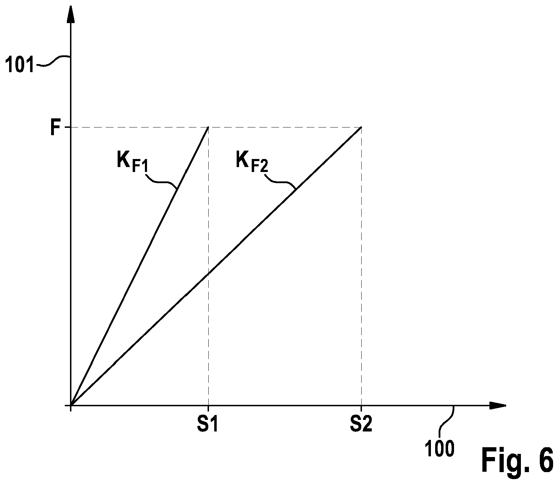

Zur Herstellung des Toleranzringes 1 wird das bandförmige Material in einem Verformungsbereich 50 verformt, wobei vor dem Verformen, während des Verformens oder danach gezielt Materialausnehmungen 4, hier in Form von Löchern, in das Material eingebracht werden, um die Federkonstante K_{F2} (siehe **Fig. 6**) des Toleranzringes 1 zu verringern. Anschließend wird das bandförmige Material um eine Welle (nicht gezeigt), die sich entlang der Achse 10 erstreckt, gebogen. Es ist auch ein gezieltes Einbringen der Materialausnehmungen 4 nach dem Biegen des bandförmigen Materials um die Welle denkbar. Dabei entspricht die Erstreckungsrichtung des bandförmigen Materials bevorzugt einer Umfangsrichtung 12 der Welle.

In allen gezeigten Ausführungsformen sind die Materialausnehmungen 4 als Löcher ausgebildet. Daher werden die Begriffe Materialausnehmung 4 und Loch im Folgenden synonym verwendet.

In der in **Fig. 1** dargestellten Ausführungsform sind im Verformungsbereich eine Vielzahl Erhebungen 2 angeordnet, die sich in Längsrichtung 11 erstrecken. Prinzipiell sind aber auch Toleranzringe 1 denkbar, bei denen sich die Erhebungen 2 in einem Winkel zur Längsrichtung 11 erstrecken. Die Erhebungen 2 sind in Umfangsrichtung 12 des Toleranzringes 1 gleichmäßig verteilt angeordnet.

In der Ausführungsform der **Fig. 1** sind die Erhebungen 2 ferner durchweg in eine der Achse 10 abgewandte Richtung, also nach außen, gerichtet. Es sind aber auch Ausführungsformen bevorzugt, in denen sich die Erhebungen 2 im Verformungsbereich 50 in die der Achse 10 abgewandte und/oder eine der Achse 10 zugewandte Richtung erstrecken, also sowohl nach außen als auch nach innen, oder nur nach innen. Dadurch stützt sich der Toleranzring 1 an dem Bauteil (nicht gezeigt) ab, welches der Achse 10 abgewandt und/oder zugewandt ist, also beispielsweise an einer der Achse 10 abgewandten Nabe oder einer der Achse 10 zugewandten Welle oder sowohl an der Nabe als auch der Welle.

Im Toleranzring 1 ist ein Spalt 30 vorgesehen, so dass er zwei sich gegenüberliegende offene Enden 31 aufweist, die voneinander beabstandet sind. Dadurch ist ein Radius des Toleranzringes 1 geringfügig änderbar. Der Spalt 30 erstreckt sich ebenfalls in die Längsrichtung 11.

Beidseitig des Verformungsbereiches 50 weist der Toleranzring 1 der **Fig. 1** jeweils einen Randbereich 51, 52 auf, in dem er nicht verformt ist, so dass er sich in den Randbereichen 51, 52 konzentrisch um die Achse 10 erstreckt.

Die Materialausnehmungen 4 sind jeweils an der den Randbereichen 51, 52 zugewandten Seite 21, 22 der Erhebungen 2 angeordnet.

Der Toleranzring 1 ist in einer fiktiven Ringfläche 6 angeordnet, die sich konzentrisch um die Achse 10 erstreckt. Dabei erstrecken sich die Randbereiche 51, 52 entlang der fiktiven Ringfläche 6. Dadurch sind die Erhebungen 2 gegenüber der Ringfläche 6 erhaben. Im der vorliegenden Ausführungsform sind die Löcher 4 so vorgesehen, dass sie jeweils an den den Randbereichen 51, 52 zugewandten Seiten 21, 22 der Erhebungen 2 zwischen der Ringfläche 6 und der Grundfläche 13 angeordnet sind.

Der Toleranzring 1 ist hier einstückig gefertigt, bevorzugt als Stanzbiegeteil. Prinzipiell ist er aber auch mehrteilig herstellbar, indem beispielsweise die Randbereiche 51, 52 und der Verformungsbereich 50 separat gefertigt und anschließend stoffschlüssig miteinander verbunden werden, insbesondere durch Schweißen. Dies gilt für alle dargestellten Toleranzringe 1.

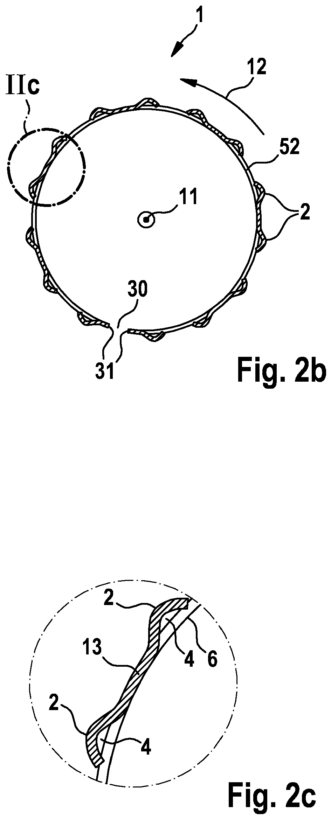

**Fig. 2** zeigt eine Ausführungsform eines erfindungsgemäßen Toleranzringes, und zwar in **Fig. 2(a)** in einer perspektivischen Ansicht, in **Fig. 2(b)** in einer Draufsicht und in **Fig. 2(c)** einen Ausschnitt C aus der **Fig. 2(b)**.

Im Gegensatz zur Ausführungsform der **Fig. 1** weist der Toleranzring 1 der **Fig. 2** im Verformungsbereich 50 sich in Längsrichtung 11 erstreckende Löcher 4 auf, sowie sich in Längsrichtung 11 erstreckende, unverformte Bereiche 501. Die Löcher 4 sowie die unverformten Bereiche 501 sind zwischen den Erhebungen 2 angeordnet. Sie sind zwischen den Erhebungen 2 so vorgesehen, dass sie sich bis zu den den Randbereichen 51, 52 zugewandten Seiten 21, 22 der Erhebungen 2 erstrecken, so dass auch hier Löcher 4 zwischen der Ringfläche 6 und der Grundfläche 13 angeordnet sind.
Die übrigen Ausführungen für den Toleranzring 1 der **Fig. 1** gelten auch für den Toleranzring 1 der **Fig. 2**.

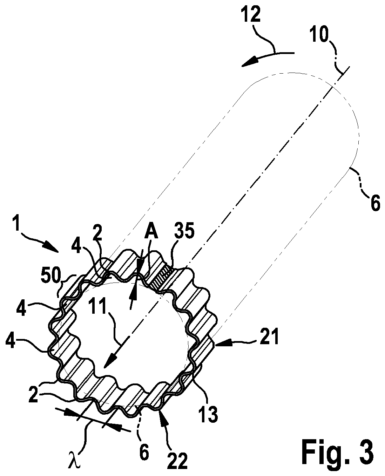

**Fig. 3** zeigt als allgemeinen technologischen Hintergrund eine weitere Ausführungsform eines Toleranzringes 1 in einer perspektivischen Darstellung. Der Toleranzring 1 weist welleförmige Erhebungen auf, so dass er insgesamt wellenförmig ausgebildet ist. Im Gegensatz zu den Ausführungsformen der **Fig. 1** und **2** weist er keine Randbereiche 51, 52 auf.

Der Toleranzring 1 ist in der fiktiven Ringfläche 6 angeordnet, so dass die Erhebungen 2 gegenüber der fiktiven Ringfläche 6 erhaben sind.

Zwischen der fiktiven Ringfläche 6 und seiner Grundfläche 13 sind gleichmäßig in Umfangsrichtung 12 verteilt Löcher 4 im Toleranzring 1 vorgesehen. Bei diesem Toleranzring 1 ist die Federkonstante K_{F2} durch die Amplitude A und Wellenlänge λ der gezielt in den Verformungsbereich 50 eingebrachten wellenförmigen Erhebungen 2 bestimmt.

Anstelle des Spaltes 30 mit den sich gegenüberliegenden offenen Enden 31 sind diese in der Ausführungsform der **Fig. 3** stoffschlüssig miteinander verbunden, insbesondere durch eine Schweißnaht 35.

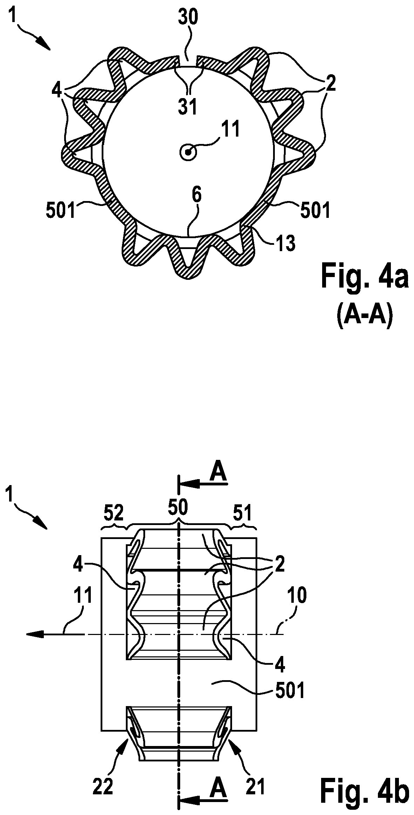

**Fig. 4** zeigt eine weitere Ausführungsform eines nicht zur Erfindung gehörenden Toleranzringes 1, und zwar in **Fig. 4(a)** in einer Draufsicht und in **Fig. 4(b)** in einer Seitenansicht.

Der Toleranzring 1 der **Fig. 4** weist beidseitig des Verformungsbereiches 580 jeweils einen Randbereich 51, 52 auf, in dem er unverformt ist und sich daher konzentrisch um die Achse 10 erstreckt. Im Verformungsbereich 50 sind die Erhebungen 2 angeordnet, die gegenüber der fiktiven Ringfläche 6, in der der Toleranzring 1 angeordnet ist, erhaben sind. Außerdem weist dieser Toleranzring 1 unverformte Bereiche 501 im Verformungsbereich 50 auf.

Die Löcher 4 sind an den den Randbereichen 51, 52 zugewandten Seiten 21, 22 der Erhebungen 2 angeordnet und zwischen der fiktiven Ringfläche 6 und der Grundfläche 13 vorgesehen. In der vorliegenden Ausführungsform erstrecken sie sich von einem unverformten Bereich 501 des Verformungsbereiches 50 zum nächsten unverformten Bereich 501 in Umfangsrichtung 12.

Dieser Toleranzring 1 weist auch einen Spalt 30 mit sich gegenüberliegenden offenen Enden 31 auf.

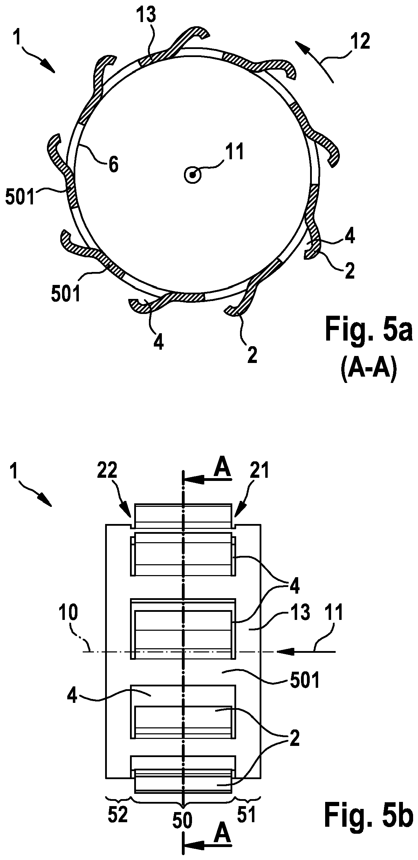

**Fig. 5** zeigt eine weitere Ausführungsform eines nicht zur Erfindung gehörenden Toleranzringes 1, und zwar in **Fig. 5a** in einer Draufsicht und in **Fig. 5b** in einer Seitenansicht. Der Toleranzring 1 der **Fig. 5** weist die den Verformungsbereich 50 begrenzenden Randbereiche 51, 52 auf, aber keinen Spalt 30. Die Löcher 4 erstrecken sich im Verformungsbereich 50 in Längsrichtung 11 zwischen den Randbereichen 51, 52. Zudem erstrekken sie sich auch an den den Randbereichen 51, 52 zugewandten Seiten 21, 22 quer zur Längsrichtung 11. Zwischen den Erhebungen 2 sind auch hier unverformte Bereiche 501 im Verformungsbereich 50 vorgesehen.

Es ist aber auch eine Ausführungsform des Toleranzringes 1 der **Fig. 5** mit einem Spalt 30 bevorzugt.

**Fig. 6** zeigt beispielhaft die Federkennlinie K_{F2} eines erfindungsgemäßen Toleranzringes 1 im Vergleich zur Federkennlinie K_{F1} eines Toleranzringes 1 gemäß dem Stand der Technik (s. **Fig. 7**). Auf der horizontalen Achse ist der Federweg 100 aufgetragen, auf der vertikalen Achse die Federkraft 101.

Die Federkonstante ergibt sich aus dem Verhältnis der Federkraft F zu dem Federweg S1, S2, um den sich der Toleranzring 1 bei dieser auf ihn in eine Richtung wirkenden Federkraft F verformt.

Die hier dargestellten Federkennlinien K_{F1}, K_{F2} zeigen einen linearen Verlauf, so dass sich die Federkonstanten dieser Toleranzringe 1 bei sich ändernder auf die Toleranzringe 1 wirkender Kraft F nicht ändern. Im Rahmen dieser Ausführungsformen werden daher die Federkonstanten mit denselben Bezugszeichen wie die Federkennlinien K_{F1}, K_{F2} bezeichnet. Erfindungsgemäße Toleranzringe 1 sind aber auch so herstellbar, dass ihre Federkennlinien K_{F2} einen nichtlinearen Verlauf zeigen, so dass sich die

Federkonstante mit steigender auf den Toleranzring 1 wirkender Federkraft F ändert.

Der herkömmliche Toleranzring 1 weist eine Federkennlinie K_{F1} mit einem steileren Verlauf im Vergleich zum erfindungsgemäßen Toleranzring 1 auf, so dass die Federkonstante K_{F1} des herkömmlichen Toleranzringes 1 größer ist, als die des erfindungsgemäßen Toleranzringes 1. Bei gleicher auf den Toleranzring 1 wirkender Federkraft F ist der Federweg S1, um den sich daher der herkömmliche Toleranzring 1 gegen seine Rückstellkraft verformt, kleiner gegenüber dem Federweg S2 des erfindungsgemäßen Toleranzringes 1.

Da der erfindungsgemäße Toleranzring 1 sich gegenüber dem herkömmlichen Toleranzring 1 bei gleicher auf ihn wirkender Federkraft F um einen größeren Federweg S2 verformt, ist er in einem größeren Arbeitsbereich einsetzbar.

**Fig. 7** zeigt den oben beschriebenen Toleranzring 1 gemäß dem Stand der Technik.

Der erfindungsgemäße Toleranzring 1 findet bevorzugt Verwendung für Welle- Nabe- Verbindungen (nicht gezeigt). Besonders bevorzugt wird er als Überlastschutz oder zur Übertragung eines Drehmomentes vorgesehen.

In einer ganz besonders bevorzugten Ausführungsform ist er in einer Fahrzeugkomponente (nicht gezeigt), beispielsweise in einem Verstellantrieb (nicht gezeigt), insbesondere einem Heckklappenantrieb, in einer Welle- Nabe- Verbindung vorgesehen und übernimmt dort neben dem Toleranzausgleich zwischen der Welle und der Nabe, die mit ihm zusammenwirken, einen Schutz vor einer von außen auf die Welle- Nabe- Verbindung wirkenden Überlast.

## Patentansprüche

1. Toleranzring (1), der aus einem bandförmigen, sich flächig erstreckenden Material mit einer durchgängig geschlossenen Grundfläche (13) hergestellt ist, und der sich zylinderförmig um eine Achse (10) und in eine Längsrichtung (11) erstreckt, mit einem Verformungsbereich (50), in dem eine Vielzahl Erhebungen (2) angeordnet sind, die gegenüber einer konzentrisch um die Achse (10) angeordneten fiktiven Ringfläche (6), in der der Toleranzring (1) angeordnet ist, erhaben sind, wobei der Verformungsbereich (50) zwischen einem ersten Randbereich (51) und einem zweiten Randbereich (52) angeordnet ist, die sich entlang der fiktiven Ringfläche (6) erstrecken, und in Längsrichtung (11) sich erstreckende, unverformte Bereiche (501) ausgebildet sind, die zwischen den Erhebungen (2) angeordnet sind, **wobei**
im Verformungsbereich (50) jeweils an einer den Randbereichen (51, 52) zugewandten Seite (21, 22) der Erhebungen (2) Materialausnehmungen (4) angeordnet sind, die die Federkonstante (K_{F2}) des Toleranzringes (1) verringern, wobei Materialausnehmungen (4) auch zwischen den Erhebungen (2) angeordnet sind, derart, dass sie sich bis zu den den Randbereichen (51, 52) zugewandten Seiten (21, 22) der Erhebungen (2) erstrecken, **wobei in Umfangsrichtung abwechselnd fortlaufend nach einer ersten Erhebung (2) ausschließlich ein unverformter Bereich (501) und nach einer zweiten Erhebung (2) ausschließlich eine Materialausnehmung (4) angeordnet ist, und alle Erhebungen (2) durchweg nach außen gerichtet sind.**

2. Toleranzring (1) nach Anspruch 1, **dadurch gekennzeichnet, dass** die Materialausnehmungen (4) Löcher sind, die durch Ausstanzen oder Ausschneiden gebildet sind.

3. Toleranzring (1) nach Anspruch 2, **dadurch gekennzeichnet, dass** die Materialausnehmungen (4) als Loch ausgebildet sind, so dass die Erhebungen (2) an ihren den Randbereichen (51, 52) zugewandten Seiten (21, 22) offen sind.

4. Toleranzring (1) nach einem der vorherigen Ansprüche, **dadurch gekennzeichnet, dass** er in dem ersten Randbereich (51) und in dem zweiten Randbereich (52) unverformt ist, so dass er sich in den Randbereichen (51, 52) konzentrisch um die Achse (10) erstreckt.

5. Toleranzring (1) nach einem der vorherigen Ansprüche, **dadurch gekennzeichnet, dass** die Erhebungen (2) in einer Umfangsrichtung (13) des Toleranzringes (1) gleichmäßig verteilt angeordnet sind.

6. Toleranzring (1) nach einem der vorherigen Ansprüche, **dadurch gekennzeichnet, dass** sich die Erhebungen (2) in Längsrichtung (11) des Toleranzringes (1) erstrecken.

7. Toleranzring (1) nach einem der vorherigen Ansprüche, **dadurch gekennzeichnet, dass** er im Verformungsbereich (50) wellenförmig ausgebildet ist.

8. Toleranzring (1) nach einem der vorherigen Ansprüche, **dadurch gekennzeichnet, dass** er einen sich in Längsrichtung (11) erstreckenden Spalt (30) aufweist, so dass er zwei offene Enden (31) aufweist, die sich gegenüber liegen.

9. Toleranzring (1) nach einem der vorherigen Ansprüche, **dadurch gekennzeichnet, dass** er einstückig gefertigt ist.

10. Komponente für ein Fahrzeug, insbesondere Heckklappenantrieb, mit einer Welle- Nabe- Verbindung, die einen Toleranzring (1) nach einem der vorherigen Ansprüche aufweist.

11. Verwendung eines Toleranzringes (1) nach einem der vorherigen Ansprüche für eine Welle- Nabe- Verbindung.

12. Verwendung eines Toleranzringes (1) nach einem der vorherigen Ansprüche als Überlastschutz.

## Claims

1. Tolerance ring (1), which is produced from a band-like material extending flat with a continuous closed base (13) and which extends cylindrically about an axis (10) and in a longitudinal direction (11), having a deformation region (50) in which there are arranged a large number of elevations (2), which are elevated relative to an imaginary annular surface (6) which is arranged concentrically around the axis (10) and in which the tolerance ring (1) is arranged, the deformation region (50) being arranged between a first edge region (51) and a second edge region (52), which extend along the imaginary annular surface (6), and non-deformed regions (501) extending in the longitudinal direction (11), which are arranged between the elevations (2), being formed,
**wherein**
material cut-outs (4), which reduce the spring constant (K_{F2}) of the tolerance ring (1), are arranged in the deformation region (50), in each case on a side (21, 22) of the elevations (2) that faces the edge regions (51, 52), wherein material cut-outs (4) are also arranged between the elevations (2) in such a way that they extend as far as the sides (21, 22) of the elevations (2) that face the edge regions (51, 52), wherein, continuously and alternately in the circumferential direction, after a first elevation (2) there is arranged only one non-deformed region (501) and, after a second elevation (2) there is arranged only one material cut-out (4), and all the elevations (2) are entirely directed outwards.

2. Tolerance ring (1) according to Claim 1, **characterized in that** the material cut-outs (4) are holes, which are formed by punching out or cutting out.

3. Tolerance ring (1) according to Claim 2, **characterized in that** the material cut-outs (4) are formed as a hole, so that the elevations (2) are open at their sides (21, 22) facing the edge regions (51, 52).

4. Tolerance ring (1) according to one of the preceding claims, **characterized in that** it is non-deformed in the first edge region (51) and in the second edge region (52), so that it extends concentrically about the axis (10) in the edge regions (51, 52).

5. Tolerance ring (1) according to one of the preceding claims, **characterized in that** the elevations (2) are arranged to be distributed uniformly in a circumferential direction (13) of the tolerance ring (1).

6. Tolerance ring (1) according to one of the preceding claims, **characterized in that** the elevations (2) extend in the longitudinal direction (11) of the tolerance ring (1).

7. Tolerance ring (1) according to one of the preceding claims, **characterized in that** it is formed in a wave-like manner in the deformation region (50).

8. Tolerance ring (1) according to one of the preceding claims, **characterized in that** it has a gap (30) extending in the longitudinal direction (11), so that it has two open ends (31) which are located opposite each other.

9. Tolerance ring (1) according to one of the preceding claims, **characterized in that** it is made in one piece.

10. Component for a vehicle, in particular a tailgate drive, comprising a shaft-hub connection which has a tolerance ring (1) according to one of the preceding claims.

11. Use of a tolerance ring (1) according to one of the preceding claims for a shaft-hub connection.

12. Use of a tolerance ring (1) according to one of the preceding claims as overload protection.

## Revendications

1. Anneau de tolérance (1) constitué d'un matériau en forme de bande s'étendant à plat avec une surface de base (13) fermée de manière continue, et qui s'étend sous forme cylindrique autour d'un axe (10) dans une direction longitudinale (11), comprenant une région de déformation (50) dans laquelle sont disposés une pluralité de rehaussements (2) qui sont rehaussés par rapport à une surface annulaire fictive (6) disposée concentriquement autour de l'axe (10), dans laquelle surface annulaire est disposé l'anneau de tolérance (1), la région de déformation (50) étant disposée entre une première région de bord (51) et une deuxième région de bord (52) qui s'étendent le long de la surface annulaire fictive (6) et des régions non déformées (501) s'étendant dans la direction longitudinale (11) étant réalisées, lesquelles sont disposées entre les rehaussements (2),
des évidements de matériau (4) qui réduisent la constante de ressort (K_{F2}) de l'anneau de tolérance (1) étant disposés dans la région de déformation (50) à chaque fois au niveau d'un côté (21, 22) des rehaussements (2) tourné vers les régions de bord (51, 52), des évidements de matériau (4) étant également disposés entre les rehaussements (2) de telle sorte qu'ils s'étendent jusqu'aux côtés (21, 22) des rehaussements (2) tournés vers les régions de bord (51, 52), dans la direction périphérique séquentiellement en alternance exclusivement une région non déformée (501) étant disposée après un premier rehaussement (2) et exclusivement un évidement de matériau (4) étant disposé après un deuxième rehaussement (2), et tous les rehaussements (2) étant orientés systématiquement vers l'extérieur.

2. Anneau de tolérance (1) selon la revendication 1, **caractérisé en ce que** les évidements de matériau (4) sont des trous qui sont formés par des estampages ou des découpages.

3. Anneau de tolérance (1) selon la revendication 2, **caractérisé en ce que** les évidements de matériau (4) sont réalisés sous forme de trou de telle sorte que les rehaussements (2) soient ouverts au niveau de leurs côtés (21, 22) tournés vers les régions de bord (51, 52).

4. Anneau de tolérance (1) selon l'une quelconque des revendications précédentes, **caractérisé en ce qu'**il n'est pas déformé dans la première région de bord (51) et dans la deuxième région de bord (52) de telle sorte qu'il s'étende concentriquement autour de l'axe (10) dans les régions de bord (51, 52) .

5. Anneau de tolérance (1) selon l'une quelconque des revendications précédentes, **caractérisé en ce que** les rehaussements (2) sont disposés de manière répartie uniformément dans une direction périphérique (13) de l'anneau de tolérance (1).

6. Anneau de tolérance (1) selon l'une quelconque des revendications précédentes, **caractérisé en ce que** les rehaussements (2) s'étendent dans la direction longitudinale (11) de l'anneau de tolérance (1).

7. Anneau de tolérance (1) selon l'une quelconque des revendications précédentes, **caractérisé en ce qu'**il est réalisé sous forme ondulée dans la région de déformation (50).

8. Anneau de tolérance (1) selon l'une quelconque des revendications précédentes, **caractérisé en ce qu'**il présente une fente (30) s'étendant dans la direction longitudinale (11) de telle sorte qu'il présente deux extrémités ouvertes (31) qui sont opposées l'une à l'autre.

9. Anneau de tolérance (1) selon l'une quelconque des revendications précédentes, **caractérisé en ce qu'**il est fabriqué d'une seule pièce.

10. Composant pour un véhicule, en particulier pour un entraînement de hayon arrière, comprenant une liaison arbre-moyeu, qui présente un anneau de tolérance (1) selon l'une quelconque des revendications précédentes.

11. Utilisation d'un anneau de tolérance (1) selon l'une quelconque des revendications précédentes pour une liaison arbre-moyeu.

12. Utilisation d'un anneau de tolérance (1) selon l'une quelconque des revendications précédentes en tant que protection contre les surcharges.
